# EUROPEAN PATENT APPLICATION

(11) **EP 2 036 637 A1**
(43) Date of publication of application: **18.03.2009**
(21) Application number: 07425561.3
(22) Date of filing: 12.09.2007
(51) Int. Cl.: B23B 27/14, B23C 3/12, B23D 79/02, B29C 37/04

(54) **Cutting insert for scarfing tools**

(71) Applicant: Diamil S.R.L., 20127 Milan (IT)
(72) Inventor: Rivola, Claudio, 20139 Milan (IT); Delogu, Michele, 28877 Ornavasso (Verbania) (IT)
(74) Representative: Carloni, Franco

(57) **Abstract**

The cutting insert comprises a prismatic plate-like body having substantially concave top and bottom surfaces connected by a plurality of substantially concave side surfaces extending between said top and bottom surfaces and forming radiused cutting edges at the juncture thereof with said top and bottom surfaces, and a plurality of radiused corner side surfaces also extending between said top and bottom surfaces, wherein each side surface extends between a first corner side surface and a second corner side surface. The concave top and bottom surfaces exhibit a substantially spherical shape and are each divided into four sectors by ribs extending in a substantially diagonal direction from the juncture of each of said corner side surfaces with said top and bottom surfaces, each pair of ribs extending on said top and bottom surfaces from adjacent corner side surfaces being connected by an arcuate chip breaking surface, said chip breaking surface being provided with chip controlling ridges arranged substantially crosswise thereof and conforming to the spherical shape of the corresponding sector to cause the chip to curl and to break.

## Description

The present invention relates to a cutting insert specially adapted for tools which are used for removing the outer weld bead on length-wise joined metal tubes.

When welding tubes made by bending sheet metal into a tubular form, a continuous weld bead is produced on the contacting line between the edges of the sheet metal which are joined together length-wise. Current practise is to remove the bead immediately after the welding process by drawing the tube under a cutting tool, also known sometimes as scarfing tool, which has a cutting insert with a concave edge conforming to the radius of a curvature of the tube cross-section.

A drawback of cutting inserts of the kind mentioned above is that they are not capable of providing an adequate control of the length and direction of the chips formed by the cutting edge of the insert, and as a result of this, the chips obtain the shape of a long thread or strip of material.

Control of the length of the chip is a key factor for obtaining a continuous working operation and avoiding sudden stops to the scarfing operation which may be caused by the build up of chips in the working area. It is important, therefore, that the chips are both broken frequently into shorter portions and suitably directed with respect to the working axis.

To avoid the aforesaid drawback it has been common practise heretofore to have a machine operator continuously watch the cutting process and manually remove the chips from the working area. Removing the chips manually, however, involves some degree of danger or risk of safety of the machine operator because the chips formed from cutting the bead immediately after the welding process can be still very hot, their temperature usually being comprised in the range of 300-400°C after they have been cut off.

It is an object of the present invention to provide a cutting insert suitable for tools used for removing the outer weld bead on length-wise welded metal tubes, with a view to the elimination of the above-mentioned drawback.

Accordingly, this object is achieved by the present invention in that the cutting insert is comprised of a prismatic plate-like body having substantially concave top and bottom surfaces connected by a plurality of substantially concave side surfaces extending between said top and bottom surfaces and forming radiused cutting edges at the juncture thereof with said top and bottom surfaces, and a plurality of radiused corner side surfaces also extending between said top and bottom surfaces, wherein each side surface extends between a first corner side surface and a second corner side surface, and is characterised in that said concave top and bottom surfaces exhibit a substantially spherical shape and are each divided into four sectors by ribs extending in a substantially diagonal direction from the juncture of each of said corner side surfaces with said top and bottom surfaces, each pair of ribs extending on said top and bottom surfaces from adjacent corner side surfaces being connected by an arcuate chip breaking surface, said chip breaking surface being provided with chip controlling ridges arranged substantially crosswise thereof and conforming to the spherical shape of the corresponding sector to cause the chip to curl and to break.

Preferably, the chip controlling ridges on each of the chip breaking surfaces are three in number and are each arranged in a substantially radial direction from a centre point of the cutting insert.

Suitably, the cutting insert is provided with a central aperture midway between the cutting edges for receiving a locking pin for securing the insert to a tool.

An example of the invention is shown in the accompanying drawings, wherein:
Figure 1 is a top view if the cutting insert according to the invention,

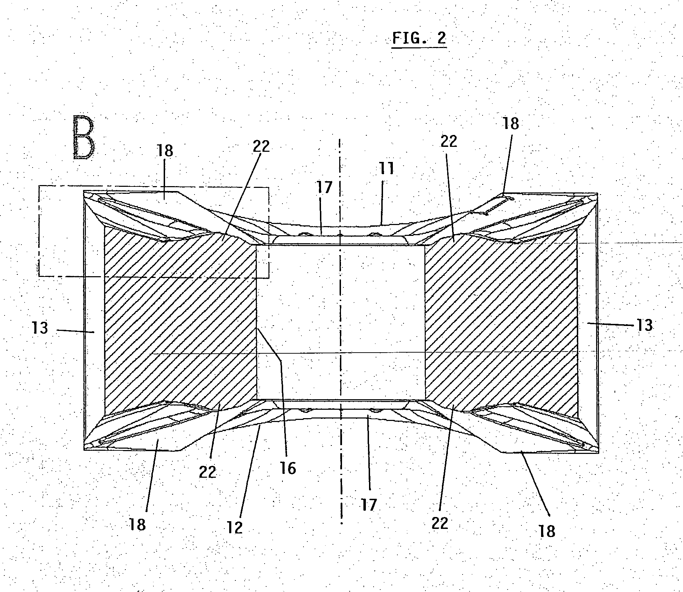

Figure 2 is a cross-section view of the cutting insert taken along line A-A of Figure 1, and

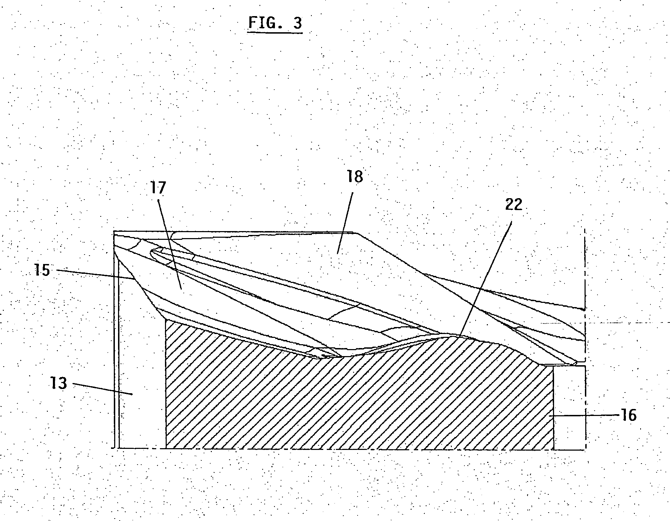

Figure 3 is an enlarged view of section B of Figure 2.

The cutting insert comprises a prismatic plate-like body 10 having a substantially concave top and bottom surface 11 and 12, and a plurality of substantially concave side surfaces 13 which extend between and connect the top and bottom surfaces. Each pair of adjacent side surfaces 13 join into a rounded corner side surface at 14 also extending between the top and bottom surfaces of the cutting insert.

Each concave side surface 13 of the cutting insert forms a radiused cutting edge 15 at the juncture thereof with the top and bottom surfaces 11 and 12. The radii of the cutting edges 15 may be different in measure.

The cutting insert is provided with a central hole 16 through which a locking pin is passed for securing the insert to a tool (not shown).

The concave top and bottom surfaces 11 and 12 are substantially spherical in shape and are each divided into four sectors 17 by ribs 18 extending in a substantially diagonal direction from the juncture of each of the corner side surfaces 14 with the top and bottom surfaces 11 and 12. Each sector 17 of the spherical top and bottom surface 11 and 12 blends into adjacent ribs 18 through sloping surfaces 19 and 20.

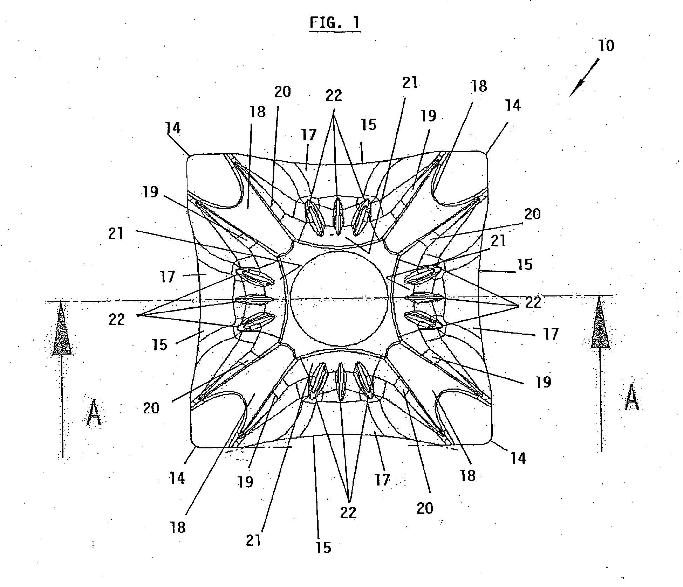

As will be seen from Figure 1, each rib 19 extending on the top and bottom surfaces 11 and 12 from a corner side surface 14 is connected to another adjacent rib 18 by an arcuate chip breaking surface 21. The chip breaking surface 21 is provided with chip controlling ridges 22, arranged substantially crosswise thereof and conforming to the spherical shape of the corresponding sector.

A cutting insert having the configuration disclosed above and shown in the drawings accomplishes the main object of the invention of controlling the length of the chips formed by the cutting edges of the insert. In use, the cutting insert directs a thread of weld bead removed from the outer surface of a length-wise welded metal tube to the centre of the cutting insert and causes the same to curl.

The chip controlling ridges on the chip breaking surface of the cutting insert cause a further deformation of the thread of weld bead, thereby making it easier for it to break, and also reduce the wear of the cutting insert.

It has been found that the arrangement of three chip controlling ridges on the chip breaking surface in a substantially radial direction from a centre point of the cutting insert as shown in Figure 1 is particularly advantageous.

The configuration of the cutting insert causes the thread of weld bead to curl and to form coils having a controlled shape and length. Furthermore, the chips are caused to move out from the cutting area in a specific direction, thus making it easier for the machine operator to collect the chips and also reducing the frequency of machine stops.

## Claims

1. A cutting insert is comprised of a prismatic plate-like body (10) having substantially concave top and bottom surfaces (11,12) connected by a plurality of substantially concave side surfaces (13) extending between said top and bottom surfaces (11,12) and forming radiused cutting edges (15) at the juncture thereof with said top and bottom surfaces (11,12), and a plurality of radiused corner side surfaces (14) also extending between said top and bottom surfaces (11,12), wherein each side surface (13) extends between a first corner side surface (14) and a second corner side surface (14), and is **characterised in that** said concave top and bottom surfaces (11,12) exhibit a substantially spherical shape and are each divided into four sectors (17) by ribs (18) extending in a substantially diagonal direction from the juncture of each of said corner side surfaces (14) with said top and bottom surfaces (11,12), each pair of ribs (18) extending on said top and bottom surfaces (11,12) from adjacent corner side surfaces (14) being connected by an arcuate chip breaking surface (21), said chip breaking surface (21) being provided with chip controlling ridges (22) arranged substantially crosswise thereof and conforming to the spherical shape of the corresponding sector (17) to cause the chip to curl and to break.

2. The cutting insert of claim 1, **characterised in that** the chip controlling ridges (22) on each of the chip breaking surfaces (21) are three in number and are each arranged in a substantially radial direction from a centre point of the cutting insert.

3. The cutting insert of claim 1, **characterised in that** it is provided with a central aperture (16) midway between the cutting edges (15) for receiving a locking pin for securing the insert to a tool.
